# EUROPEAN PATENT APPLICATION

(11) **EP 3 843 008 A1**
(43) Date of publication of application: **30.06.2021**
(21) Application number: 20216878.7
(22) Date of filing: 23.12.2020
(51) Int. Cl.: G06K 19/04, G06K 19/07, G06K 19/06, B65D 5/42

(54) **BOX MADE OF A PAPER MATERIAL, PROVIDED WITH A QR CODE THEREIN WHICH IS READABLE BY A SMARTPHONE ONLY AFTER OPENING THE BOX ITSELF**

(30) Priority: 23.12.2019 IT 201900004744 U
(71) Applicant: Mastalia, Francesco, 84123 Salerno (IT)
(72) Inventor: Mastalia, Francesco, 84123 Salerno (IT)
(74) Representative: Sarpi, Maurizio

(57) **Abstract**

A papermaking product consisting of a three-dimensional box or case, made of a paper material, which is usable as a container, provided with a QR code therein which is not visible from the outside, and which is readable by a common smartphone, only after opening it. This allows whoever has opened the box, by means of a smartphone provided with specific software, to access web sites, information and online videos instantly, open web pages, view digital business cards, creating a direct connection, through the network, between whoever holds said container/box and, depending on the case, the manufacturer of the goods or whoever sent the package or whoever made the gift, without the presence of leaflets, instruction labels and greeting cards.

Alternatively, inside the box or case made of a paper material, a passive RFID tag is arranged, having a microchip which, upon the passage of a reader emitting a radio signal at suitable frequencies, is supplied with the energy required to respond to the reader, retransmitting thereto a signal containing the information stored in the chip.

## Description

The present invention relates to a papermaking product consisting of a three-dimensional box or case, made of a paper material, which is usable as a container, provided with a QR code therein which is not visible from the outside, and which is readable by a common smartphone, only after opening it. As known, the QR code is a two-dimensional barcode, i.e., with a matrix, consisting of black modules arranged inside a white, interactive and multimedia square pattern: when framed with the camera of a mobile phone, with the aid of specific software, they allow accessing internet sites, online information and videos instantly and therefore can be used to open web pages, view digital business cards and much more, creating a direct connection, through the network, between whoever holds said container/box and, depending on the case, the manufacturer of the good contained, whoever sent it by post or whoever gave it as a gift. This allows removing any printed explanatory leaflet, advertising leaflets or cards with any content from the box, while ensuring the receipt of general information and personal messages.

This has been achieved according to the invention by a box having the peculiar feature that both the box as such and the insertion of the QR code are achievable both manually and by machining operations with industrial papermaking machines, starting from a flat extension obtained on a single sheet of paper material, such a term meaning a material such as paper, cardboard or similar materials, which is configured to allow the application of a QR code to the inner face of the upper closure of the box. According to the model, the QR code can be applied directly by printing or gluing. Only after lifting the cover, it is possible to frame the QR code with a smartphone and connect to the network.

Alternatively, or even in combination with the QR code, according to a different embodiment of the invention, a passive RFID tag can be used, which contains, as known, a microchip (with unique identifier and possible memory) lacking power supply, an antenna and a material which acts as a physical support referred to as a "substrate". The latter can be a: plastic film (PET, PVC, etc.), paper or other materials, and in particular Mylar, a transparent, flexible, and exceptionally strong and long-lasting polyester film. Upon the passage of a reader emitting a radio signal at low or medium frequencies or of a few gigahertz (under the different bands used), the radio frequency activates the microchip and supplies it with the energy required to respond to the reader, retransmitting thereto a signal containing the information stored in the chip, but which can, in turn, unlike the QR Code, also write data on the tag.

Further features and advantages of the invention will be more easily understood from the following detailed description, given with reference to the accompanying drawings which illustrate, merely by way of non-limiting example, a preferred embodiment.

In the drawings:
fig. 1 is a perspective view of the front side of the box, once completed;
fig. 2 is a perspective view of the same side of the box in fig. 1, showing the box once opened, with the cover lifted showing the QR code which can be framed by a smartphone;
fig. 3 shows the flat extension of the sheet preferably, but not exclusively, made of a paper material, seen from the part forming the inside of the box with the back of the cover where the QR code is positioned.
With reference to the figures, the box or postal box of the present invention is a box-shaped container 2 created from the extension 4 obtained in a sheet, preferably but not exclusively, of cardboard or the like and shown in fig. 3.

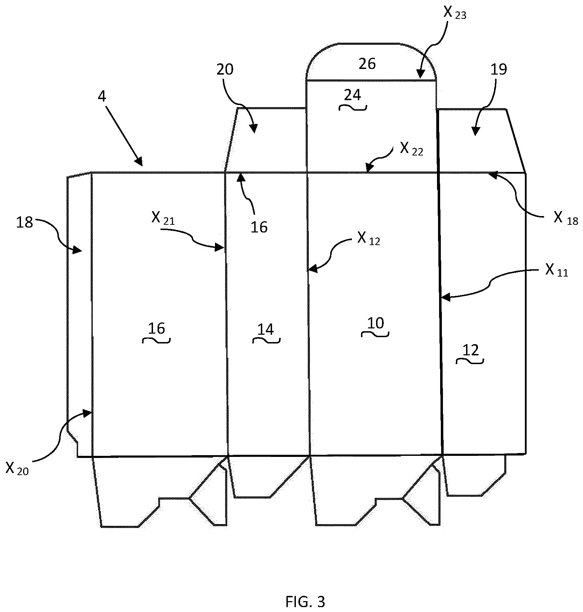

In particular, observing said fig. 3, said extension 4 comprises:
a rectangular portion 10 forming the front wall of the box, connected on each of the two long opposite sides to a rectangular portion 12 and a rectangular portion 14, respectively, which are identical in size and foldable on parallel fold lines X₁₁, X₁₂, which form the side walls of the box. In turn, on the long side opposite to the folding side X₁₂, the portion 14 is connected to a rectangular portion 16, equal in size to the portion 12, which when folded on a fold line X₂₁ forms the rear wall of the box. A further fold line X₂₀ parallel to the preceding one defines a flap 18, on which the free vertical edge of the portion 12 is fixed, preferably by gluing.

Both the rectangular portions 12 and 14 are provided on the upper short sides with fins 19, 20 which are foldable on fold lines X₁₆, X₁₈ to be surmounted by a rectangular portion 24 originating from the short upper side of the portion 10 and which is foldable along a fold line X₂₂ to form the top cover of the box. In turn, such a portion 24 is provided with a conveniently shaped fin 26 which, when folded over a fold line X₂₃, is inserted into the box from above, keeping the cover 24 in the closed position.

On the lower sides, all the portions 10-16 are provided with conveniently shaped lower fins and with predetermined fold lines, adapted to cooperate with one another in usual manners, to form the bottom wall of the box.

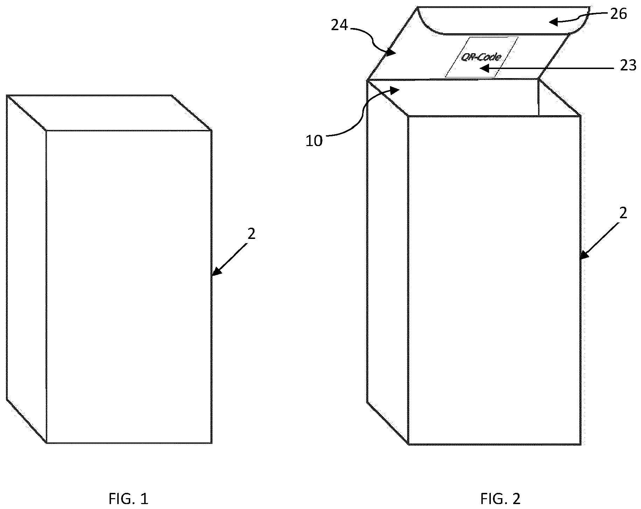

As seen in fig. 2, the QR code 23 is positioned on the inner face of the portion 24: the positioning thereof occurs in the initial machining step, when the extension 4 is still laid flat and before starting the folding operations in sequence.

Once the box is closed, the presence of the QR code is not visible from the outside and cannot be framed by a smartphone.

It should be noted that advantageously on all the areas to be glued, such as the side fins, security adhesives are used, which prevent the detachment thereof except by resorting to visible alterations (abrasions and tears) of the material of which they are made. The same can be performed on the fin 26 which keeps the cover 24 in the closed position and ensures privacy. Therefore, any break-in attempt is immediately recognizable.

It is apparent that several variations and modifications can be made by those skilled in the art during the production of boxes and the like, without departing from the scope of protection defined by the following claims.

For example, as previously mentioned, in a different embodiment of the invention, instead or in combination with the QR code, a passive RFID tag may be used, which consists, as known, of a substrate which can be a :plastic film (PET, PVC, etc.), paper or other materials, and in particular Mylar, (a transparent, flexible and exceptionally strong and durable polyester film), which acts as a physical support for a microchip (with unique identifier and possible memory) lacking power supply, and an antenna.

Upon the passage of a reader emitting a radio signal at a suitable frequency, the radio frequency activates the microchip and supplies it with the energy required to respond to the reader, retransmitting thereto a signal containing the information stored in the chip, but which can, in turn, unlike the QR Code, also write data on the RFID tag.

## Claims

1. A three-dimensional box made of a paper material or the like, provided with a liftable folding cover, which is usable as a container for any product or as a postal package for the transmission of three-dimensional objects, **characterized in that** it is provided, on the inner face of said liftable cover, with a QR code which can be framed by a smartphone only after opening said box, so as to allow whoever has opened said box, by means of a smartphone provided with specific software, to access web sites, information and online videos instantly, open web pages, view digital business cards, creating a direct connection, through the network, between whoever holds said container/box and, depending on the case, the manufacturer of the goods or whoever sent the package or whoever made the gift, without the presence of leaflets, instruction labels and greeting cards.

2. A three-dimensional box made of cardboard or the like according to the preceding claim, **characterized in that** the QR code (23) is applied to an inner face of the flat extension forming the box itself, so as to be visible from the outside only when the box has been opened.

3. A three-dimensional box according to any one of the preceding claims, **characterized in that** the QR code (23) is applied to the inner face of said extension by gluing a label with a QR code or by means of direct printing.

4. A three-dimensional box according to any one of the preceding claims, **characterized in that** the QR code (23) is applied to the inner face of the tiltable cover (24) of the box, which is provided with a conveniently shaped fin (26) which, when folded on a fold line (X₂₃), is inserted from above into the box, keeping said cover (24) in the closed position, said fin being provided on the face facing outwards with a layer of security adhesive which makes any break-in attempt apparent.

5. A three-dimensional box made of a paper material or the like, provided with a liftable folding cover, which is usable as a container for any product or as a postal package for the transmission of three-dimensional objects, **characterized in that** it is provided, on the inner face of said liftable cover, with a passive RFID tag which is visible only after opening said box, so as to allow whoever has opened said box, by means of a reader emitting a radio signal at a frequency capable of activating the microchip of said RFID tag, to supply it with the energy required to respond to the reader, instantly providing information and viewing digital business cards, creating a direct connection between whoever holds the container/box and, depending on the case, the manufacturer of the goods or whoever sent the package or whoever made the gift, without the presence of leaflets, instruction labels and greeting cards.
